# EUROPÄISCHE PATENTSCHRIFT

(11) **EP 1 686 246 B1**
(45) Veröffentlichungstag und Bekanntmachung des Hinweises auf die Patenterteilung: **11.04.2012**
(21) Anmeldenummer: 05023124.0
(22) Anmeldetag: 24.10.2005
(51) Int. Cl.: F01N 1/16, F01N 1/08, F01N 3/28

(54) **Schalldämpfer für eine Abgasanlage**
Silencer for an exhaust gas system
Silencieux pour système d'échappement

(30) Priorität: 26.01.2005 DE 102005003582
(43) Veröffentlichungstag der Anmeldung: 02.08.2006
(73) Patentinhaber: Dr. Ing. h.c. F. Porsche AG, 70435 Stuttgart (DE)
(72) Erfinder: Schorn, Jürgen, 71277 Rutesheim (DE); Winkel, Jörg, 71287 Weissach (DE)

(56) Entgegenhaltungen:
- DE-U1- 29 512 732
- JP-A- 9 228 819
- JP-A- 2005 016 444
- US-A- 1 403 614
- US-A- 1 512 210

## Beschreibung

Bei der Erfindung wird ausgegangen von einem Schalldämpfer für eine Abgasanlage einer Brennkraftmaschine eines Kraftfahrzeugs, gemäß Oberbegriff des Anspruchs 1.

Aus der JP 9-228819 A ist ein Schalldämpfer für eine Abgasanlage einer Brennkraftmaschine bekannt. Der Schalldämpfer besteht aus einem Katalysator und einem nachgeschalteten eigentlichen Schalldämpfer, in dem eine erste und zweite Strömungsleitung angeordnet sind. Mithin besitzt der Schalldämpfer an dem Katalysator einen Abgaseinlass und an dem Schalldämpfer einen Abgasauslass. Eine der Strömungsleitungen, nämlich die erste Strömungsleitung, durchsetzt den Schalldämpfer vollständig und mündet in einem Abgasendrohr, welches stromabwärts des Schalldämpfers liegt. Zwischen der zweiten Strömungsleitung, die den Schalldämpfer lediglich teilweise durchsetzt, und der ersten Strömungsleitung liegt innerhalb des Schalldämpfers ein Überströmweg. Stromaufwärts des Schalldämpfers, und zwar zwischen dem Schalldämpfer und dem Katalysator, ist ein Verzweigungselement vorgesehen, welches über den Katalysator mit dem Abgaseinlass verbunden ist. Zwischen dem Katalysator, der ein Gehäuse aufweist, und dem Schalldämpfer liegt in der ersten Strömungsleitung ein Absperrmittel, welches somit auch stromaufwärts des Schalldämpfers liegt. Insgesamt weist der bekannte Schalldämpfer, bestehend aus Katalysator und dem eigentlich schalldämpfenden Teil, eine relativ große Baulänge auf.

Ein Schalldämpfer einer Abgasanlage ist aus der DE 38 35 079 A1 bekannt. Fig. 5 in dieser DE 38 35 079 A1 zeigt diesen Schalldämpfer, der einen einzigen Abgaseinlass und zwei Abgasendrohre aufweist. Der Schalldämpfer wird von einer ersten Strömungsleitung vollständig durchsetzt, die sowohl den einzigen Abgaseinlass als auch eines der Abgasendrohre aufweist. In dem Abgasendrohr, welches stromabwärts des Schalldämpfers liegt, ist ein Absperrmittel zum Absperren und Freigeben der ersten Strömungsleitung angeordnet. Das Absperrmittel ist als so genannte Abgasklappe ausgeführt, die über einen Schwenkmechanismus betätigt werden kann. Innerhalb des Schalldämpfers ist eine zweite Strömungsleitung angeordnet, die mit dem zweiten Abgasendrohr aus dem Schalldämpfer herausgeführt ist. Ist das Absperrmittel geöffnet, tritt der Abgasstrom der Brennkraftmaschine über den Abgaseinlass ein und kann über die erste Strömungsleitung ungehindert bis zum Abgasendrohr geführt werden. Bei geschlossenem Absperrmittel tritt über eine innerhalb des Schalldämpfers angeordnete Perforation in der ersten Strömungsleitung das Abgas aus, durchdringt einen in einer Trennwand angeordneten Stutzen und tritt über eine Perforation in den zweiten Strömungsweg ein und kann so über das zweite Abgasendrohr abtransportiert werden. Die beiden Perforationen sowie der in der Trennwand angeordnete Stutzen bilden mithin einen innerhalb des Schalldämpfers liegenden Überströmweg zwischen der ersten und der zweiten Strömungsleitung.

Aufgabe der Erfindung ist es, einen Schalldämpfer der eingangs genannten Art hinsichtlich seiner Funktion und der Integration in eine Abgasanlage zu optimieren.

Gelöst wird diese Aufgabe mit einem Schalldämpfer, der die in Anspruch 1 genannten Merkmale umfasst. Weitere, die Erfindung ausgestaltende Merkmale sind in den Unteransprüchen enthalten.

Die mit der Erfindung hauptsächlich erzielten Vorteile sind darin zu sehen, dass durch die Anordnung des Absperrmittels stromaufwärts des Gehäuses des Schalldämpfers, jedoch stromabwärts eines Katalysatorgehäuses, eine günstige Beeinflussung des aus dem Abgasendrohr austretenden Abgasgeräusches möglich ist. Es hat sich dabei gezeigt, dass durch die erfindungsgemäße Anordnung des Absperrmittels vor dem Schalldämpfer ein deutlicher Klangunterschied erzielt werden kann, wenn das von der Brennkraftmaschine produzierte Abgas über die erste oder zweite Strömungsleitung geführt wird. Durch das erfindungsgemäße Verzweigungselement, welches den Abgaseinlass sowohl mit der ersten als auch der zweiten Strömungsleitung verbindet, kann der erfindungsgemäße Schalldämpfer auch in herkömmliche Abgasanlagen integriert und gegebenenfalls auch in eine bestehende Abgasanlage ohne Absperrmittel nachgerüstet werden. Ferner ist vorteilhaft, dass kein separates Verzweigungselement bereitgestellt werden muss, sondern dass das Katalysatorgehäuse mit diesem Verzweigungselement ausgestattet ist. So ist außerdem vorgesehen, dass das Katalysatorgehäuse eine Stirnplatte aufweist, die das Verzweigungselement bildet. Dabei kann beispielsweise die Stirnplatte Verzweigungsöffnungen aufweisen, an die sich die erste und zweite Strömungsleitung anschließen. Das Katalysatorgehäuse wird direkt an dem Schalldämpfer befestigt, wodurch zwischen dem Katalysatorgehäuse und dem Schalldämpfer sonst vorgesehene Abgasleitungen entfallen können, wobei das Katalysatorgehäuse zumindest teilweise innerhalb des Schalldämpfers liegt. So wird eine einfache Verbindung zwischen Katalysatorgehäuse und Schalldämpfer ermöglicht. In vorteilhafter Weise liegt das Absperrmittel außerhalb des Schalldämpfers. Dies ermöglicht eine einfache Verbindung des Absperrmittels mit einem dafür vorgesehenen Antrieb. Der Schalldämpfer weist einen Ausschnitt auf, in dem der Bypassabschnitt mit dem Absperrmittel verläuft. Gegenüber einem konventionellen Schalldämpfer ohne Absperrmittel ist bei dem erfindungsgemäßen Schalldämpfer somit kein vergrößerter Einbauraum notwendig.

Liegt zumindest die Stirnplatte des Katalysatorgehäuses innerhalb des Schalldämpfers (Anspruch 2), kann diese eine Wandung des Schalldämpfers bilden.

Weist der Überströmweg eine Dämpfungseinrichtung auf, wie dies in Anspruch 3 angegeben ist, wird sich der Klang des Schalldämpfers bei geöffnetem bzw. verschlossenem Absperrmittel weiter unterscheiden. Besonders bevorzugt wird dabei die Dämpfungseinrichtung eine perforierte Trennwand aufweisen, die innerhalb des Schalldämpfers angeordnet ist.

Ein besonders bevorzugtes Ausführungsbeispiel des Überströmweges ist in Anspruch 5 angegeben. Dabei ist vorteilhaft, dass bei geöffnetem Absperrmittel eine durch die erste Trennwand begrenzte Kammer mit einem Volumen über den Einlass an die erste Strömungsleitung angekoppelt wird, was den Klang des Schalldämpfers bei geöffnetem Absperrmittel günstig beeinflusst.

Gemäß Anspruch 6 ist vorteilhaft, dass die zweite Trennwand die erste und zweite Strömungsleitung innerhalb des Schalldämpfers abstützen kann.

Wird - gemäß Anspruch 7 - die zweite Trennwand perforiert ausgeführt, kann eine weitere Kammer innerhalb des Schalldämpfers bereitgestellt werden, die mit ihrem Volumen an die erste Kammer angekoppelt ist, was die Dämpfung des Geräusches des Abgases günstig beeinflusst.

Mit den in Anspruch 8 angegebenen Merkmalen kann in vorteilhafter Weise der erfindungsgemäße Schalldämpfer mit einem weiterführenden Abgasauslass verbunden werden, welcher auch für einen konventionellen Schalldämpfer ohne Absperrmittel vorgesehen sein kann. Somit kann eine Abgasanlage in Modulbauweise bereitgestellt werden, bei der der Schalldämpfer mit Absperrmittel ohne weiteres gegen einen Schalldämpfer mit Absperrmittel und umgekehrt ausgetauscht werden kann.

Die Modulbauweise wird weitergebildet, wenn gemäß Anspruch 9 das Katalysatorgehäuse, der Schalldämpfer mit den beiden Strömungsleitungen, das Abgasendrohr und das Absperrmittel eine vormontierte Baueinheit bilden, die in das Kraftfahrzeug mit der Abgasanlage eingesetzt werden kann.

Die Erfindung wird nachfolgend anhand eines Ausführungsbeispieles mit Bezug auf die Zeichnung näher erläutert. Es zeigen:
- Fig. 1: in einem Schnitt einen Schalldämpfer einer sonst nicht weiter dargestellten Abgasanlage einer Brennkraftmaschine und
- Fig. 2 + 3: jeweils einen Schnitt entlang der Linie II-II bzw. III-III durch den Schalldämpfer nach Fig. 1.

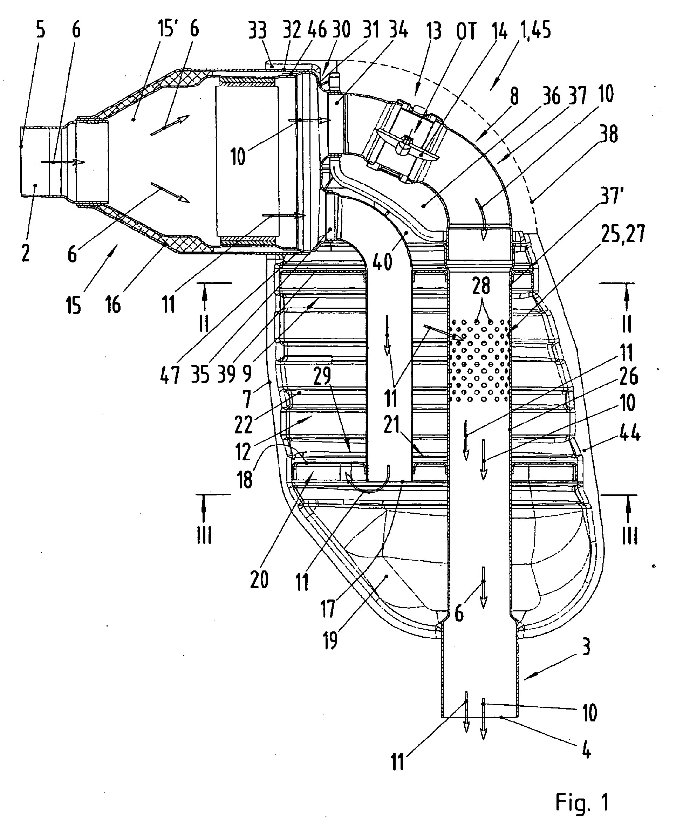

Fig. 1 zeigt einen Längsschnitt eines Schalldämpfers 1 einer sonst nicht weiter dargestellten Abgasanlage für eine Brennkraftmaschine eines Kraftfahrzeugs. Vorzugsweise ist die Abgasanlage zweiflutig ausgeführt für die Brennkraftmaschine, die beispielsweise zwei Zylinderbänke aufweisen kann. Entsprechend umfasst die Abgasanlage für jede Zylinderbank einen derartigen Schalldämpfer 1. Mit einem Abgaseinlass 2 ist der Schalldämpfer 1 mit einem hier nicht gezeigten Leitungsstrang verbunden, der in bekannter Weise, gegebenenfalls unter Zwischenschaltung eines so genannten Vorkatalysators, mit der Brennkraftmaschine verbunden ist. Ferner besitzt der Schalldämpfer 1 ausgangsseitig ein einzelnes Abgasendrohr 3, welches gegebenenfalls mit dem anderen Abgasendrohr des anderen Schalldämpfers der Abgasanlage zu einem hier nicht gezeigten Abgasauslass am Heck des Kraftfahrzeugs führt. Das Abgasendrohr 3 weist eine Endrohröffnung 4 und der Abgaseinlass 2 weist eine Einlassöffnung 5 auf. Mithin ergibt sich innerhalb des Schalldämpfers 1 eine Strömungsrichtung für das Abgas, die durch stromabwärts gerichtete Pfeile 6 gekennzeichnet ist. Zwischen der Einlassöffnung 5 und der Endrohröffnung 4 liegt der Schalldämpfer 1, der ein Schalldämpfergehäuse 7 aufweist, in dem durch eine erste und zweite Strömungsleitung 8 und 9 ein erster und zweiter Strömungsweg 10 und 11 für das an der Einlassöffnung 5 eintretende Abgas gebildet ist. Der erste und zweite Strömungsweg 8 und 9 sind durch jeweils mehrere Pfeile mit den entsprechenden Bezugszeichen 10 und 11 versehen. Innerhalb des Schalldämpfergehäuses 7 ist zwischen der ersten und zweiten Strömungsleitung 8 und 9 bzw. zwischen dem ersten und zweiten Strömungsweg 10 bzw. 11 ein Überströmweg 12 gebildet, der es ermöglicht, aus der zweiten Strömungsleitung 9 austretendes Abgas in den ersten Strömungsweg 8 innerhalb des Schalldämpfers 1 einzuleiten.

Die erste Strömungsleitung 8 durchsetzt den Schalldämpfer 1 vollständig und endet außerhalb des Schalldämpfers 1 mit dem Abgasendrohr 3. Innerhalb der Strömungsleitung 8 ist noch ein Absperrmittel 13 mit einem beweglichen Ventilkörper, insbesondere in Form einer beweglichen Klappe 14, angeordnet, welches Absperrmittel 13 die erste Strömungsleitung 8 absperren und für den ersten Strömungsweg 10 freigeben kann. Dem Absperrmittel 13 ist beispielsweise ein hier nicht gezeigter Antrieb zugeordnet, der die Klappe 14 in die in Fig. 1 gezeigte Öffnungsstellung OT zum Freigeben und in eine nicht dargestellte Schließstellung zum Absperren der ersten Strömungsleitung 8 bewegen kann. Dem Schalldämpfer 1 stromaufwärts, also in entgegen gesetzter Richtung zum Pfeil 6, ist dem Schalldämpfer 1 ein Katalysator 15 mit einem in einem Katalysatorgehäuse 16 angeordneten Abgasbehandlungseinsatz 15' vorgeschaltet, welcher Katalysator 15 mit seinem Katalysatorgehäuse 16 jedoch teilweise in das Schalldämpfergehäuse 7 integriert ist.

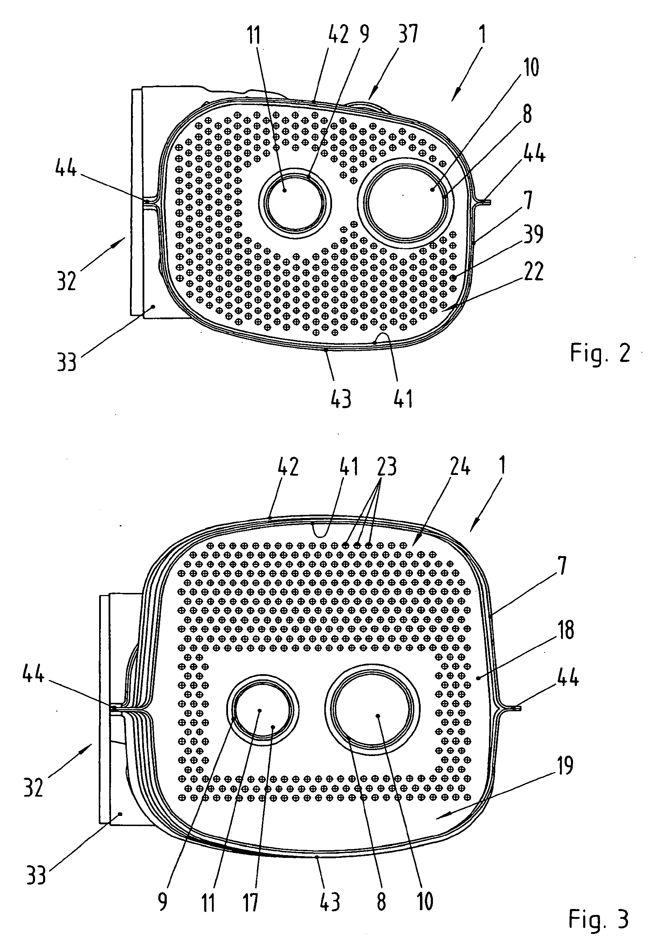

In dem Schalldämpfer 1 ist die zweite Strömungsleitung 9 angeordnet, die mit einer Mündung 17 innerhalb des Schalldämpfergehäuses 7 endet, so dass das Abgas in das Schalldämpfergehäuse 7 austreten, über den Überströmweg 12 in die erste Strömungsleitung 8 einströmen und schließlich zum Abgasendrohr 3 strömen kann. In dem Überströmweg 12 liegt eine erste Trennwand 18 innerhalb des Schalldämpfergehäuses 7. Die erste Trennwand 18 liegt bezüglich der Mündung 17 stromaufwärts, so dass innerhalb des Schalldämpfergehäuses 7 eine erste Kammer 19 von einer ersten Seite 20 der Trennwand 18 begrenzt wird. Auf der zweiten Seite 21 der ersten Trennwand 18 ist eine zweite Kammer 22 innerhalb des Schalldämpfergehäuses 7 ausgebildet. Für die Überströmung des Abgases aus der ersten Kammer 19 in die zweite Kammer 22 weist die erste Trennwand 18 zumindest eine Öffnung, vorzugsweise jedoch eine mehrere Öffnung 23 umfassende Perforation 24 auf, wie dies aus dem Querschnitt gemäß Fig. 3 hervorgeht, in der im übrigen gleiche Teile mit denselben Bezugszeichen versehen sind. Somit tritt aus der Mündung 17 an der ersten Seite 20 der Trennwand 18 der Abgasstrom aus, tritt in die Kammer 19 ein, durchsetzt die Perforation 24 der ersten Trennwand 18 und gelangt so zur zweiten Kammer 22, aus der das Abgas über einen Einlass 25 in der ersten Strömungsleitung 8 Eingang findet, um schließlich zum Abgasendrohr 3 zu gelangen. Der Einlass 25 befindet sich demnach innerhalb der zweiten Kammer 22 und auf der zweiten Seite 21 der ersten Trennwand 18. Vorzugsweise ist der Einlass 25 durch eine den Mantel 26 der ersten Strömungsleitung 8 durchdringende Lochung 27 bzw. Perforation mit mehreren Öffnungen 28 gebildet. Innerhalb des Überströmwegs 12 befindet sich somit für das Abgas eine Dämpfungseinrichtung 29, die zumindest die perforierte erste Trennwand 18 aufweist. Sofern der Einlass 25 durch entsprechende Konfiguration eine Dämpfung des Abgases bewirkt, ist somit der Einlass 25 gegebenenfalls der Dämpfungseinrichtung 29 zuzuordnen. Je nach Stellung des Absperrmittels 13 ergibt sich somit von der Einlassöffnung 5 in Richtung Abgasendrohr 3 eine Strömung für das Abgas bei geöffneter Klappe 14 über die erste Strömungsleitung 8 bzw. den ersten Strömungsweg 10; bei geschlossener Klappe 14 und abgesperrter erster Strömungsleitung 8 ist der zweite Strömungsweg 11 aktiv, der zunächst innerhalb der zweiten Strömungsleitung 9 liegt, über den Überströmweg 12 sowie anschließend über den Einlass 25 eingekoppelt in die erste Strömungsleitung 8 übergeht. Somit dient dieser Einlass 25 einerseits der Einleitung des Abgases von dem zweiten Strömungsweg 11 in den ersten Strömungsweg 10, wenn das Absperrmittel 13 die erste Strömungsleitung 8 absperrt, und andererseits zur Ankoppelung eines Dämpfervolumens (zweite Kammer 22) für den ersten Strömungsweg 10, wenn das Absperrmittel 13 die erste Strömungsleitung 8 freigibt, respektive die Klappe 14 in der Öffnungsstellung OT vorliegt.

Damit der über den Abgaseinlass 2 eintretende Abgasstrom - je nach Stellung des Absperrmittels 13 - in die erste oder zweite Strömungsleitung 8 oder 9 eingeleitet werden kann, ist dem Abgaseinlass 2 stromabwärts ein Verzweigungselement 30 nachgeordnet, welches sowohl mit der ersten als auch zweiten Strömungsleitung 8 und 9 verbunden ist. Zwischen dem Verzweigungselement 30 und dem Abgaseinlass 2 liegt der Katalysator 15 mit seinem Katalysatorgehäuse 16. Das Verzweigungselement 30 ist Bestandteil des Katalysatorgehäuses 16 und bildet vorzugsweise dessen Stirnplatte 31, die - durch die teilweise Integration des Katalysators 15 in dem Schalldämpfer 1 - innerhalb des Schalldämpfergehäuses 7 zu liegen kommt und gleichzeitig eine Wandung des Schalldämpfergehäuses 7 bildet. Im gezeigten Ausführungsbeispiel ist somit der Katalysator 15 mit seinem Gehäuse 16 direkt an dem Schalldämpfer 1 befestigt. Dafür besitzt das Schalldämpfergehäuse 7 einen Aufnahmekanal 32, der durch einen das Katalysatorgehäuse 16 umgebenden Flansch 33 gebildet ist. Für die Verbindung der beiden Strömungsleitungen 8 und 9 mit dem Abgaseinlass 2 weist die Stirnplatte 31 zwei entsprechende Verzweigungsöffnungen 34 und 35 auf, in die jeweils die zugeordnete erste bzw. zweite Strömungsleitung 8 bzw. 9 eingesetzt sind. Die Verzweigungsöffnung 35 liegt innerhalb des Schalldämpfergehäuses 7 und die Verzweigungsöffnung 34 durchbricht das Schalldämpfergehäuse 7 im Bereich eines Gehäuseausschnitts 36 des Schalldämpfergehäuses 7. Innerhalb dieses Ausschnitts 36 verläuft die erste Strömungsleitung 8 mit einem gebogenen Bypassabschnitt 37, der somit außerhalb des Schalldämpfergehäuses 7 liegt und in dem das Absperrmittel 13 angeordnet ist. Somit verläuft der Bypassabschnitt 37 innerhalb einer etwa viertelkreisförmigen, gedachten Randkontur 38 (gestrichelt eingezeichnet) des Schalldämpfergehäuses 7. Mit dem Bypassabschnitt 37 und einem sich daran anschließenden Rohrstück 37' der ersten Strömungsleitung 8 wird die Dämpfungseinrichtung 29 umgangen.

Aus dem Schnitt durch das Schalldämpfergehäuse 7 in Fig. 2 und aus Fig. 1 geht hervor, dass in dem Schalldämpfer 1 stromaufwärts zum Einlass 25 noch eine zweite Trennwand 39 die zweite Kammer 22 begrenzt und das Schalldämpfergehäuse 7 in eine dritte Kammer 40 unterteilt, welche dritte Kammer 40 von der den Schalldämpfer 1 teilweise durchsetzenden zweiten Strömungsleitung 9 durchdrungen wird. Die zweite Trennwand 39 weist - wie die erste Trennwand 18 - zumindest eine Öffnung, vorzugsweise jedoch eine mehrere Öffnungen 23 umfassende Perforation 24 auf, wodurch das Volumen der dritten Kammer 40 als Dämpfungsvolumen für den zweiten Strömungsweg 11 wirken kann. Überdies dient die zweite Trennwand 39, ebenso wie die erste Trennwand 18, der Abstützung der ersten und zweiten Strömungsleitung 8 und 9 innerhalb des Schalldämpfergehäuses 7, so dass die erste und zweite Strömungsleitung gegenüber einer Innenwandung 41 des Schalldämpfergehäuses 7 gehalten ist.

Wie aus den Fig. 2 und 3 ersichtlich, setzt sich das Schalldämpfergehäuse 7 aus zwei schalenartigen Gehäuseteilen 42 und 43 zusammen, die jeweils einen nach außen abgebogenen Randstreifen 44 aufweisen, an dem sie miteinander fest verbunden sind. Nachdem die beiden Gehäuseteile 42 und 43 zusammengesetzt sind, also das Schalldämpfergehäuse 7 verschlossen ist, liegt eine vormontierte Baueinheit 45 vor, die den Katalysator 15 mit seinem Gehäuse 16, den Schalldämpfer 1 mit den beiden Strömungsleitungen 8 und 9, das Abgasendrohr 3, den Abgaseinlass 2 sowie das Absperrmittel 13 umfasst. Die Baueinheit 45 kann daher als ein Modul in die Abgasanlage des Kraftfahrzeugs eingesetzt werden.

Nachfolgend wird noch auf Ausführungsbeispiele des Schalldämpfers 1 eingegangen: Das Verzweigungselement 30 bzw. die Stirnplatte 31 des Katalysatorgehäuses 16 weist einen umlaufenden Kragen 46 auf, der einstückig mit der Stirnplatte 31 ausgeführt sein kann, so dass das Verzweigungselement topfförmig realisiert ist. Der Kragen 46 kann teilweise innerhalb des Katalysatorgehäuses 16 liegen, d.h. darin eingesteckt sein. Die Verzweigungsöffnung 35 könnte somit alternativ seitlich an dem Verzweigungselement 30 angeordnet sein und der zweiten Trennwand 39 zugewandt liegen, was in den Figuren allerdings nicht dargestellt ist. Die andere Verzweigungsöffnung 34 könnte demnach etwa mittig von der Stirnplatte 31 ausgehen; zusätzlich wäre es denkbar, die Stirnplatte 31 trichterförmig auszuführen, wodurch für die erste Strömungsleitung 8 eine Strömungsoptimierung für das Abgas ermöglicht wird. Anstelle der seitlichen, von dem Kragen 46 ausgehenden Verzweigungsöffnung könnte in einer nicht dargestellten Abwandlung eine Perforation in dem Kragen 46 bzw. in dem innerhalb des Schalldämpfergehäuses 7 liegenden Abschnitts 47 des Katalysatorgehäuses 16 ausgebildet sein. Diese Perforation könnte lediglich teilweise oder über den gesamten Umfang des Kragens 46 bzw. Abschnitts 47 eingebracht sein.

Der als Lochung 27 ausgeführte Einlass 25 in der ersten Strömungsleitung 8 kann in einer Ausführungsvariante als umlaufender Trennschnitt (nicht gezeigt) in dem Mantel 26 realisiert sein, so dass die Strömungsleitung 8 zwischen der ersten und zweiten Trennwand 18, 39 aufgetrennt ist und sich zwei Rohrenden der Strömungsleitung 8 mit Abstand gegenüberstehen. Das stromabwärtige Rohrende könnte trichterförmig aufgeweitet sein. Der Abstand der beiden Rohrenden zueinander kann beispielsweise 10 mm bis 30 mm betragen.

## Patentansprüche

1. Schalldämpfer (1) für eine Abgasanlage einer Brennkraftmaschine eines Kraftfahrzeugs, mit einem Abgaseinlass (2), einer innerhalb des Schalldämpfers angeordneten, diesen vollständig durchsetzenden ersten Strömungsleitung (8), in der ein Absperrmittel (13) zum Absperren und Freigeben angeordnet ist, einem Abgasendrohr (3), das stromabwärts des Schalldämpfers (1) liegt und mit der ersten Strömungsleitung (8) verbunden ist, einer zweiten Strömungsleitung (9), die den Schalldämpfer teilweise durchsetzt, mit einem innerhalb des Schalldämpfers liegenden Überströmweg (12) zwischen der ersten und zweiten Strömungsleitung, wobei die erste und zweite Strömungsleitung (8, 9) über ein Verzweigungselement (30) mit dem Abgaseinlass (2) verbunden sind, zwischen dem Abgaseinlass (2) und dem Verzweigungselement (30) ein Katalysatorgehäuse (16) angeordnet ist, und das Absperrmittel (13) in der ersten Strömungsleitung (8) stromaufwärts des Schalldämpfers (1), jedoch stromabwärts des Katalysatorgehäuses (16) angeordnet ist, **dadurch gekennzeichnet, dass** das Katalysatorgehäuse (16) eine Stirnplatte mit Verzweigungsöffnungen (34, 35) aufweist, die das Verzweigungselement (30) bildet, dass das Katalysatorgehäuse (16) direkt an dem Schalldämpfer (1) befestigt ist, dass das Katalysatorgehäuse (16) zumindest teilweise innerhalb des Schalldämpfers (1) liegt, dass die erste Strömungsleitung (8) mit zumindest einem Bypassabschnitt (37) außerhalb des Schalldämpfers (1) verläuft, dass in dem Bypassabschnitt (37) das Absperrmittel (13) angeordnet ist, dass das Gehäuse (7) des Schalldämpfers (1) einen Gehäuseausschnitt (36) aufweist und dass innerhalb dieses Gehäuseausschnitts (36) der Bypassabschnitt (37) verläuft.

2. Schalldämpfer nach Anspruch 1, **dadurch gekennzeichnet, dass** zumindest die Stirnplatte (31) innerhalb des Schalldämpfers (1) liegt.

3. Schalldämpfer nach Anspruch 1, **dadurch gekennzeichnet, dass** der Überströmweg (12) eine Dämpfungseinrichtung (29) aufweist.

4. Schalldämpfer nach Anspruch 3, **dadurch gekennzeichnet, dass** die Dämpfungseinrichtung (29) eine innerhalb des Schalldämpfers (1) angeordnete erste perforierte Trennwand (18) besitzt.

5. Schalldämpfer nach den Ansprüchen 1 und 4, **dadurch gekennzeichnet, dass** die zweite Strömungsleitung (9) auf einer ersten Seite (20) der Trennwand (18) in den Schalldämpfer (1) mündet (Mündung 17) und dass die erste Strömungsleitung (8) innerhalb des Schalldämpfers (1) einen Einlass (25) aufweist, der auf einer zweiten Seite (21) der Trennwand (18) liegt.

6. Schalldämpfer nach den Ansprüchen 1 und 4 oder 5, **dadurch gekennzeichnet, dass** innerhalb des Schalldämpfers (1) eine zweite Trennwand (39) stromaufwärts zur ersten Trennwand (18) angeordnet ist, die von der ersten und der zweiten Strömungsleitung (8, 9) durchbrochen wird.

7. Schalldämpfer nach Anspruch 6, **dadurch gekennzeichnet, dass** die zweite Trennwand (39) perforiert und stromaufwärts des Einlasses (25) der ersten Strömungsleitung (8) angeordnet ist.

8. Schalldämpfer nach Anspruch 1, **dadurch gekennzeichnet, dass** ein einziges Abgasendrohr (3) aus dem Schalldämpfer (1) herausgeführt ist.

9. Schalldämpfer nach einem der vorhergehenden Ansprüche, **dadurch gekennzeichnet, dass** das Katalysatorgehäuse (16), der Schalldämpfer (1) mit den beiden Strömungsleitungen (8, 9), das Abgasendrohr (3) und das Absperrmittel (13) eine vormontierte Baueinheit (45) bilden, die in das Kraftfahrzeug eingesetzt werden kann.

## Claims

1. Silencer (1) for an exhaust-gas system of an internal combustion engine of a motor vehicle, having an exhaust-gas inlet (2), a first flow line (8) which is arranged within the silencer, penetrates the latter completely and in which a shut-off means (13) for shutting off and opening is arranged, an exhaust-gas tailpipe (3) which lies downstream of the silencer (1) and is connected to the first flow line (8), a second flow line (9) which partially penetrates the silencer, with a crossflow path (12) between the first and second flow lines, which crossflow path (12) lies within the silencer, the first and second flow lines (8, 9) being connected via a branching element (30) to the exhaust-gas inlet (2), a catalytic-converter housing (16) being arranged between the exhaust-gas inlet (2) and the branching element (30), and the shut-off means (13) in the first flow line (8) being arranged upstream of the silencer (1) but downstream of the catalytic-converter housing (16), **characterized in that** the catalytic-converter housing (16) has an end plate with branching openings (34, 35), which end plate forms the branching element (30), **in that** the catalytic-converter housing (16) is fastened directly to the silencer (1), **in that** the catalytic-converter housing (16) lies at least partially within the silencer (1), **in that** the first flow line (8) runs with at least one bypass section (37) outside the silencer (1), **in that** the shut-off means (13) is arranged in the bypass section (37), **in that** the housing (7) of the silencer (1) has a housing cut-out (36), and **in that** the bypass section (37) runs within the said housing cut-out (36).

2. Silencer according to Claim 1, **characterized in that** at least the end plate (31) lies within the silencer (1).

3. Silencer according to Claim 1, **characterized in that** the crossflow path (12) has a damping device (29).

4. Silencer according to Claim 3, **characterized in that** the damping device (29) has a first perforated dividing wall (18) which is arranged within the silencer (1).

5. Silencer according to Claims 1 and 4, **characterized in that** the second flow line (9) opens on a first side (20) of the dividing wall (18) into the silencer (1) (opening 17), and **in that** the first flow line (8) has an inlet (25) within the silencer (1), which inlet (25) lies on a second side (21) of the dividing wall (18).

6. Silencer according to Claims 1 and 4 or 5, **characterized in that** a second dividing wall (39) is arranged upstream of the first dividing wall (18) within the silencer (1), which second dividing wall (39) is breached by the first and the second flow lines (8, 9).

7. Silencer according to Claim 6, **characterized in that** the second dividing wall (39) is perforated and is arranged upstream of the inlet (25) of the first flow line (8).

8. Silencer according to Claim 1, **characterized in that** a single exhaust-gas tailpipe (3) is routed out of the silencer (1).

9. Silencer according to one of the preceding claims, **characterized in that** the catalytic-converter housing (16), the silencer (1) with the two flow lines (8, 9), the exhaust-gas tailpipe (3) and the shut-off means (13) form one preassembled structural unit (45) which can be inserted into the motor vehicle.

## Revendications

1. Silencieux (1) pour un système de gaz d'échappement d'un moteur à combustion interne d'un véhicule automobile, avec une entrée de gaz d'échappement (2), avec une première conduite d'écoulement (8) disposée à l'intérieur du silencieux et traversant celui-ci entièrement, dans laquelle est disposé un élément de fermeture (13) pour la fermer et la libérer, avec un tube final à gaz d'échappement (3), qui est situé en aval du silencieux (1) et qui est raccordé à la première conduite d'écoulement (8), avec une deuxième conduite d'écoulement (9) qui traverse partiellement le silencieux, avec un chemin de trop-plein (12) situé à l'intérieur du silencieux entre la première et la deuxième conduites d'écoulement, dans lequel la première et la deuxième conduites d'écoulement (8, 9) sont raccordées à l'entrée de gaz d'échappement (2) au moyen d'un élément de branchement (30), un boîtier de catalyseur (16) est disposé entre l'entrée de gaz d'échappement (2) et l'élément de branchement (30), et le moyen de fermeture (13) est disposé dans la première conduite d'écoulement (8) en amont du silencieux (1) mais en aval du boîtier de catalyseur (16), **caractérisé en ce que** le boîtier de catalyseur (16) présente une plaque frontale avec des ouvertures de branchement (34, 35), qui forme l'élément de branchement (30), **en ce que** le boîtier de catalyseur (16) est fixé directement sur le silencieux (1), **en ce que** le boîtier de catalyseur (16) est situé au moins partiellement à l'intérieur du silencieux (1), **en ce que** la première conduite d'écoulement (8) s'étend avec au moins une section dé dérivation (37) à l'extérieur du silencieux (1), **en ce que** le moyen de fermeture (13) est disposé dans la section de dérivation (37), **en ce que** le boîtier (7) du silencieux (1) présente une découpe de boîtier (36) et **en ce que** la section de dérivation (37) s'étend à l'intérieur de cette découpe de boîtier (36).

2. Silencieux selon la revendication 1, **caractérisé en ce qu'**au moins la plaque frontale (31) est située à l'intérieur du silencieux (1).

3. Silencieux selon la revendication 1, **caractérisé en ce que** le chemin de trop-plein (12) présente un dispositif d'amortissement (29).

4. Silencieux selon la revendication 3, **caractérisé en ce que** le dispositif d'amortissement (29) comporte une première paroi de séparation perforée (18) disposée à l'intérieur du silencieux (1).

5. Silencieux selon les revendications 1 et 4, **caractérisé en ce que** la deuxième conduite d'écoulement (9) débouche dans le silencieux (1) sur un premier côté (20) de la paroi de séparation (18) (embouchure 17) et **en ce que** la première conduite d'écoulement (8) présente, à l'intérieur du silencieux (1), une entrée (25) qui est située sur un deuxième côté (21) de la paroi de séparation (18).

6. Silencieux selon les revendications 1 et 4 ou 5, **caractérisé en ce qu'**une deuxième paroi de séparation (39) est disposée à l'intérieur du silencieux (1) en amont de la première paroi de séparation (18), et est traversée par la première et par la deuxième conduites d'écoulement (8, 9).

7. Silencieux selon la revendication 6, **caractérisé en ce que** la deuxième paroi de séparation (39) est perforée et est disposée en amont de l'entrée (25) de la première conduite d'écoulement (8).

8. Silencieux selon la revendication 1, **caractérisé en ce qu'**un seul tube final à gaz d'échappement (3) est mené hors du silencieux (1).

9. Silencieux selon l'une quelconque des revendications précédentes, **caractérisé en ce que** le boîtier de catalyseur (16), le silencieux (1) avec les deux conduites d'écoulement (8, 9), le tube final à gaz d'échappement (3) et le moyen de fermeture (13) forment une unité de construction pré-assemblée (45), qui peut être utilisée dans le véhicule automobile.
